(19) Europäisches Patentamt
European Patent Office
Office européen des brevets

(11) EP 4 659 565 A1

# (12) EUROPEAN PATENT APPLICATION

published in accordance with Art. 153(4) EPC

(43) Date of publication:
**10.12.2025 Bulletin 2025/50**

(21) Application number: **24750129.9**

(22) Date of filing: **25.01.2024**

(51) International Patent Classification (IPC):
***A01G 9/14*** *(2006.01)* ***A01G 13/02*** *(2006.01)*
***B32B 27/18*** *(2006.01)* ***C08J 5/18*** *(2006.01)*

(52) Cooperative Patent Classification (CPC):
**A01G 9/14; A01G 13/20; B32B 27/18; C08J 5/18;**
Y02A 40/25

(86) International application number:
**PCT/JP2024/002280**

(87) International publication number:
**WO 2024/162180 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.02.2023 JP 2023014803**

(71) Applicant: **AGC INC.**
**Chiyoda-ku,**
**Tokyo 1008405 (JP)**

(72) Inventor: **ODA, Koichi**
**Tokyo 100-8405 (JP)**

(74) Representative: **Müller-Boré & Partner Patentanwälte PartG mbB**
**Friedenheimer Brücke 21**
**80639 München (DE)**

## (54) HEAT-RAY BLOCKING FILM AND AGRICULTURAL GREENHOUSE

(57) A heat ray shielding film has, in the following order, a thermoplastic resin substrate A, a heat ray shielding layer including a binder resin and an inorganic particle, and a thermoplastic resin substrate B.

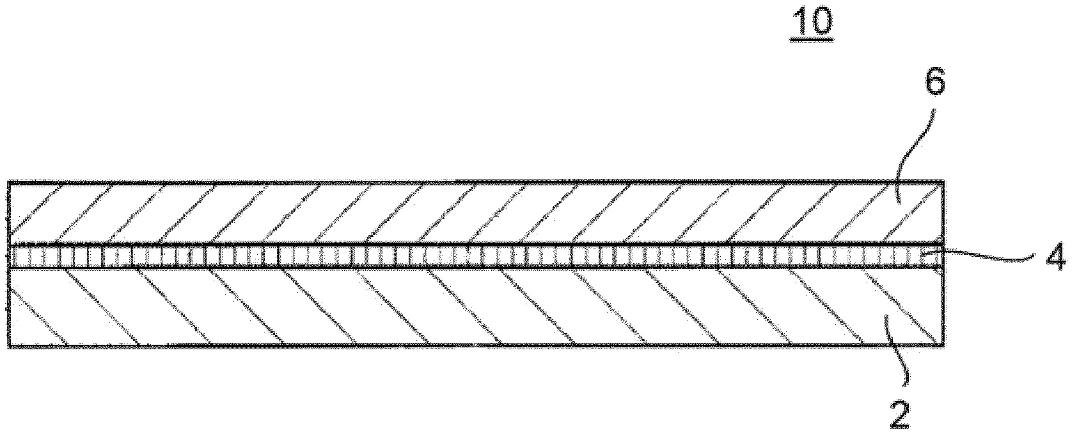


FIG. 1

EP 4 659 565 A1

## Description

### Technical Field

The present invention relates to a heat ray shielding film and an agricultural greenhouse.

### Background Art

Resin films have been widely used for applications such as architectural window materials, vehicle window materials, and agricultural greenhouses. However, during seasons of strong sunlight such as summer, sunlight passes through the resin film and enters the room, resulting in an increase in room temperature.

Patent Document 1 discloses a fluororesin film that uses indium tin oxide having a specific particle size in combination with a blue pigment having a specific particle size, and the respective contents of indium tin oxide and blue pigment have a specific relationship with a film thickness. The fluororesin film is described as being capable of controlling the transmittance of harmful rays without impairing properties such as transparency, mechanical strength, and weather resistance; as being free from yellowing caused by the addition of indium tin oxide; and as exhibiting excellent colorless transparency and heat ray-shielding properties.

Patent Document 2 also discloses a heat ray shielding film in which a metal-doped indium oxide film of a specific thickness is formed on a surface of a transparent substrate. It is described that the metal-doped indium oxide film of a specific thickness is formed by a sputtering method. The heat ray shielding film is described as having excellent visible light transmission and heat-reflecting properties.

### Related Art Document

### Patent Document

Patent document 1: International Publication No. 2013/125548
Patent document 2: Japanese Patent Application Laid-Open (JP-A) No. 2008-105297

## SUMMARY OF INVENTION

### Technical Problem

However, in view of recent global warming, a further improvement in heat shielding performance is desired. Additionally, a heat ray-shielding film with excellent durability is in demand.

Therefore, the present disclosure aims to provide a heat ray shielding film having excellent long-term heat ray shielding properties, and an agricultural greenhouse equipped with a heat ray shielding film.

### Solution to Problem

Specific means for achieving the above problem are as follows:

<1> A heat ray shielding film including, in the following order, a thermoplastic resin substrate A, a heat ray shielding layer including a binder resin and an inorganic particle, and a thermoplastic resin substrate B.
<2> The heat ray shielding film according to <1>, in which an average thickness of the heat ray shielding layer is 1 μm or less.
<3> The heat ray shielding film according to <1> or <2>, in which the inorganic particle includes indium tin oxide.
<4> The heat ray shielding film according to any one of <1> to <3>, in which an adhesive layer or a bonding layer is provided at least between the heat ray shielding layer and the thermoplastic resin substrate A or between the heat ray shielding layer and the thermoplastic resin substrate B.
<5> The heat ray shielding film according to <4>, in which at least one layer of the adhesive layer or the bonding layer includes an ultraviolet absorbing agent.
<6> The heat ray shielding film according to any one of <1> to <5>, in which each of the thermoplastic resin substrate A and the thermoplastic resin substrate B independently includes at least one thermoplastic resin selected from the group consisting of a polyolefin resin, a polyvinyl chloride resin, a polyethylene terephthalate resin, and a fluororesin.
<7> The heat ray shielding film according to any one of <1> to <6>, in which at least one of the thermoplastic resin

substrate A or the thermoplastic resin substrate B includes a fluororesin, and the fluororesin is a thermoplastic resin.
<8> The heat ray shielding film according to any one of <1> to <7>, in which a value of (visible light transmittance - solar transmittance) / visible light transmittance × 100 is 10% or more, and a ratio of a solar transmittance after an exposure treatment to a solar transmittance before the following exposure treatment is 1.05 or less:
exposure treatment: exposure for 5000 hours using an open frame carbon arc lamp in accordance with JIS K7350-4: 2008.
<9> The heat ray shielding film according to any one of <1> to <8>, further including an anti-drip layer on the outer surface of at least one of the thermoplastic resin substrate A or the thermoplastic resin substrate B.
<10> The heat ray shielding film according to any one of <1> to <9>, which is for agricultural use.
<11> An agricultural greenhouse, including the heat ray shielding film according to any one of <1> to <10>.

Advantageous Effects of Invention

According to the present disclosure, it is possible to provide a heat ray shielding film having excellent long-term heat ray shielding properties, and an agricultural greenhouse equipped with a heat ray shielding film.

BRIEF DESCRIPTION OF DRAWINGS

FIG. 1 is a schematic cross-sectional view illustrating a layer structure of an example of a heat ray shielding film in the present disclosure.

DESCRIPTION OF EMBODIMENTS

Hereinafter, embodiments in the present disclosure will be described in detail. However, the present disclosure is not limited to the following embodiments. In the following embodiments, the components (including element steps and the like) are not essential unless otherwise specified. The same applies to numerical values and their ranges thereof, and does not limit the present disclosure.
In the present disclosure, numerical ranges indicated by "to" mean ranges that include the respective numerical values described before and after the "to" as the minimum and maximum values.
In numerical ranges described in a stepwise manner in the present disclosure, the upper limit value or lower limit value of one range may be replaced with the upper limit value or lower limit value of another stepwise-described range. Additionally, in the numerical ranges described in the present disclosure, the upper limit value or lower limit value of one range may be replaced with a value shown in the examples.
In the present disclosure, each component may include a plurality of corresponding substances. In a case in which a plurality of substances corresponding to each component are present in the composition, a content or amount of each component, unless otherwise specified, means a total content or amount of the plurality of substances present in the composition.
In the present disclosure, a particle corresponding to each component may include a plurality of types of particles. In a case in which a plurality of types of particles corresponding to each component are present in the composition, a particle size of each component, unless otherwise specified, means a value for a mixture of the plurality of types of particles present in the composition.
In the present disclosure, the term "layer" includes not only the case in which the layer is formed over the entire region when the region where the layer exists is observed, but also the case in which the layer is formed only in a part of the region.

<Heat ray shielding film>

A heat ray shielding film in the present disclosure includes, in this order, a thermoplastic resin substrate A, a heat ray shielding layer including a binder resin and an inorganic particle, and a thermoplastic resin substrate B
The reason why excellent long-term heat ray shielding properties are achieved by adopting the above configuration is presumed to be as follows, however the present invention is not limited to the following presumptions.
In the above-mentioned Patent Document 1, a fluororesin film is kneaded with indium tin oxide and a blue pigment, and the particles of indium tin oxide and the blue pigment are dispersed in the fluororesin.
Accordingly, the fluororesin exists between these particles, and the particles are present apart from each other. As a result, sunlight (infrared rays) enters through these spaced portions, thereby reducing heat ray shielding properties. It should be noted that increasing the content of the particles in order to reduce the distance between the particles makes the fluororesin film brittle and also makes it difficult to form into a film.
The heat ray shielding film of the present disclosure is a film having excellent heat ray shielding properties by

functionally separating and forming separate layers of a substrate having a self-supporting function as a film and a layer exhibiting the function of heat ray shielding. By providing the heat ray shielding layer as a separate layer, an amount of inorganic particles in the heat ray shielding layer, a thickness of the heat ray shielding layer, and the like can be freely designed, and as a result, a content of inorganic particles per unit area can be increased, thereby obtaining a film having excellent heat ray shielding properties.

In the above Patent Document 2, a metal-doped indium oxide film is formed as a separate layer from the transparent substrate. However, since the metal-doped indium oxide film is formed by a sputtering method, the manufacturing cost tends to be high. In addition, since the metal-doped indium oxide film of Patent Document 2 is a sputtering film, the metal-doped indium oxide is densely present, resulting in excellent heat ray shielding properties. However, there is a demand for a heat ray shielding film that can withstand even longer-term use. In the present disclosure, the term "long-term" refers to approximately 5,000 hours in the weather resistance acceleration test shown in the examples.

The heat ray shielding film in the present disclosure is configured such that thermoplastic resin substrates are provided on both sides of the heat ray shielding layer, thereby suppressing detachment of the inorganic particles contained in the heat ray shielding layer, deterioration, or damage, or the like, and maintaining heat ray shielding properties over long term. It has been found that in a case in which a thermoplastic resin substrate is disposed on a sputtered film of metal-doped indium oxide, the adhesion at the interface tends to decrease, and the heat ray shielding properties tend to deteriorate during long-term use. Therefore, in the present disclosure, a binder resin is contained in the heat ray shielding layer, whereby the adhesion between the heat ray shielding layer and the thermoplastic resin substrate is improved, resulting in a heat ray shielding film having excellent heat ray shielding properties over the long term. Since an amount of binder resin in the heat ray shielding layer can be appropriately designed, a heat ray shielding film having excellent heat ray shielding properties can be obtained even when the heat ray shielding layer contains a binder resin.

FIG. 1 shows a schematic cross-sectional view illustrating a layer structure of an example of a heat ray shielding film in the present disclosure.

The heat ray shielding film (10) in FIG. 1 is formed by providing a thermoplastic resin substrate A (2), a heat ray shielding layer (4), and a thermoplastic resin substrate B (6) in this order. An adhesive layer or bonding layer (not shown) may be provided between the thermoplastic resin substrate A (2) and the heat ray shielding layer (4), and between the heat ray shielding layer (4) and the thermoplastic resin substrate B (6). In addition, an anti-drip layer (not shown) may be provided on at least one outer surface of the thermoplastic resin substrates (2, 6). Furthermore, other layers such as an undercoat layer (not shown) may be provided.

(Thermoplastic resin substrates A and B)

The thermoplastic resin substrates A and B (collectively referred to as "thermoplastic resin substrate") are not particularly limited as long as they are substrates containing a thermoplastic resin. The thermoplastic resin substrates A and B are preferably those having high transparency, and independently, each preferably has a visible light transmittance of preferably 70% or more, more preferably 85% or more, and even more preferably 87% or more, with higher visible light transmittance being more preferable.

Each of the thermoplastic resin substrates A and B independently preferably contains at least one thermoplastic resin selected from the group consisting of a polyolefin resin, a polyvinyl chloride resin, a polyethylene terephthalate resin, and a fluororesin, and from the viewpoint of improving the durability of the heat ray shielding film, it is more preferable that at least one of the thermoplastic resin substrates A and B contains a fluororesin. Both the thermoplastic resin substrates A and B may contain a fluororesin, or one of the thermoplastic resin substrates A or B may contain a fluororesin and the other may contain a resin other than a fluororesin, and from the viewpoint of improving the durability of the heat ray shielding film, it is preferable that both the thermoplastic resin substrates A and B contain a fluororesin. The fluororesin is preferably a thermoplastic resin.

The fluororesin is not particularly limited as long as it contains fluorine in the molecular structure of the resin, and known fluororesins can be used. Examples thereof include a thermoplastic resin such as a tetrafluoroethylene type resin, a chlorotrifluoroethylene type resin, a vinylidene fluoride type resin, and a vinyl fluoride type resin. Among these, tetrafluoroethylene resin is preferred from the viewpoint of excellent weather resistance, anti-fouling properties, or the like.

Examples of the tetrafluoroethylene type resins include a tetrafluoroethylene-perfluoro(alkyl vinyl ether) copolymer, a tetrafluoroethylene-hexafluoropropylene-perfluoro(alkyl vinyl ether) copolymer, a tetrafluoroethylene-hexafluoropropylene copolymer, a tetrafluoroethylene-ethylene copolymer, and an ethylene-trichlorofluoroethylene copolymer.

Among these, a tetrafluoroethylene-perfluoro(alkyl vinyl ether) copolymer, a tetrafluoroethylene-hexafluoropropylene copolymer, a tetrafluoroethylene-ethylene copolymer, and an ethylene-trichlorofluoroethylene copolymer are preferred. Among these, a tetrafluoroethylene-ethylene copolymer (hereinafter also referred to as "ETFE") is particularly preferred from the viewpoint of cost, mechanical strength, sputtering film formability, or the like.

ETFE is a copolymer having a structural unit derived from ethylene (hereinafter also referred to as "E")

(hereinafter also referred to as "E unit") and a structural unit derived from tetrafluoroethylene (hereinafter also referred to as "TFE") (hereinafter also referred to as "TFE unit"). ETFE may further have a structural unit derived from a monomer other than E and TFE, as necessary.

The molar ratio of E unit/TFE unit in ETFE is preferably from 40/60 to 70/30, more preferably from 40/60 to 60/40.

A total content of the E unit and the TFE unit is preferably 90 mol% or more, more preferably 95 mol% or more, and may be 100 mol% with respect to 100 mol% of all units constituting ETFE.

Other monomer in ETFE may be any monomers that can be copolymerized with E and TFE, and examples thereof include a fluorine-containing ethylene such as $CF_2=CFCl$ and $CF_2=CH_2$; a fluorine-containing propylene such as $CF_2=CFCF_3$ and $CF_2=CHCF_3$; a fluorine-containing alkyl ethylene having a fluoroalkyl group having 2 to 10 carbon atoms such as $CH_2=CHC_2F_5$, $CH_2=CHC_3F_7$, $CH_2=CHC_4F_9$ (PFBE), $CH_2=CFC_4F_9$, $CH_2=CF(CF_2)_3H$, and $CH_2=CHC_6F_{13}$; a perfluoro(alkyl vinyl ether) such as $CF_2=CFO(CF_2CFXO)_mR^f$ (in which $R^f$ represents a perfluoroalkyl group having 1 to 6 carbon atoms, X represents a fluorine atom or a trifluoromethyl group, and m represents an integer of 1 to 5); and a vinyl ether having a group that can be converted to a carboxylic acid group or a sulfonic acid group, such as $CF_2=CFOCF_2CF_2CF_2COOCH_3$ and $CF_2=CFOCF_2CF(CF_3)OCF_2CF_2SO_2F$.

The Other monomer in ETFE is preferably the fluorine-containing alkyl ethylene having a fluoroalkyl group having 2 to 10 carbon atoms or the perfluoro(alkyl vinyl ether), more preferably the fluorine-containing alkyl ethylene having a fluoroalkyl group having 2 to 10 carbon atoms, $CH_2=CHC_3F_7$, $CH_2=CHC_4F_9$, or $CH_2=CHC_6F_{13}$, and particularly preferably $CH_2=CHC_4F_9$.

In a case in which ETFE has the other monomer unit, a content of the other monomer unit is preferably from 0.01 to 10 mol%, more preferably from 0.05 to 5 mol%, and even more preferably from 0.1 to 4 mol% with respect to 100 mol% of all units constituting ETFE.

A melting point of ETFE is preferably 200°C or higher, more preferably 210°C or higher, even more preferably 225°C or higher, and particularly preferably 240°C or higher. In a case in which the melting point of ETFE is within the above range, the heat ray shielding film in the present disclosure is likely to have excellent durability.

An upper limit of the melting point of ETFE is not particularly limited, and, for example, 270°C.

The "melting point" means a temperature corresponding to a maximum value of a melting peak measured by differential scanning calorimetry (DSC).

A melt flow rate (MFR) of ETFE is preferably from 2 to 40 g/10 min, more preferably from 5 to 30 g/10 min, and even more preferably from 10 to 20 g/10 min.

In a case in which the MFR of ETFE is within the above range, the heat ray shielding film in the present disclosure is likely to have excellent durability.

The MFR of ETFE is a value measured at a load of 49 N and 297°C in accordance with ASTM D3159.

Each of the thermoplastic resin substrates A and B may independently contain an ultraviolet absorbing agent. Examples of the ultraviolet absorbing agent include those described in an adhesive layer or bonding layer. In a case in which the thermoplastic resin substrate contains an ultraviolet absorbing agent, the ultraviolet absorbing agent may be kneaded with the thermoplastic resin to obtain the thermoplastic resin substrate A or B.

In a case in which the thermoplastic resin substrate contains the ultraviolet absorbing agent, a content of the ultraviolet absorbing agent in the thermoplastic resin substrate is preferably from 0.1 to 1.5 % by mass, and more preferably from 0.3 to 0.8 % by mass.

A content of the thermoplastic resin contained in the thermoplastic resin substrates A and B is preferably 60 % by mass or more, more preferably 80 % by mass or more, and even more preferably 95 % by mass or more, respectively, from the viewpoint of easily improving the durability of the heat ray shielding film. The content of the thermoplastic resin contained in the thermoplastic resin substrates A or B may each independently be 100% by mass.

A content of the fluororesin contained in the thermoplastic resin substrates A or B is preferably 60% by mass or more, more preferably 80% by mass or more, and even more preferably 95% by mass or more, respectively, from the viewpoint of easily improving the durability of the heat ray shielding film. The content of the fluororesin contained in the thermoplastic resin substrates A or B may each independently be 100% by mass.

A content of the ETFE contained in the thermoplastic resin substrates A or B is preferably 60% by mass or more, more preferably 80% by mass or more, and even more preferably 95% by mass or more, respectively, from the viewpoint of easily improving the durability of the heat ray shielding film. The content of the ETFE contained in the thermoplastic resin substrates A or B may each independently be 100% by mass.

A shape of the thermoplastic resin substrates A and B is not particularly limited, and each independently may be any shape such as a plate, a sheet, or a film.

A thickness of the thermoplastic resin substrates A and B is not particularly limited and may be appropriately selected depending on the material, application, shape, or the like. For example, in the case of a plate-shaped thermoplastic resin substrate, an average thickness thereof is preferably from 2 mm to 50 mm, more preferably from 2 mm to 20 mm. In addition, in the case of a film-shaped or sheet-shaped thermoplastic resin substrate, an average thickness thereof is preferably from 10 μm to 1 mm, more preferably from 12 μm to 300 μm, and even more preferably from

20 μm to 200 μm. The average thickness of the thermoplastic resin substrate is an average value of values measured at five points with a micrometer.

The thickness of the thermoplastic resin substrate A and the thickness of the thermoplastic resin substrate B may be the same or different.

(Heat ray shielding layer)

The heat ray shielding layer contains a binder resin and an inorganic particle.

Examples of an inorganic component contained in the inorganic particle include indium tin oxide, antimony tin oxide, indium zinc oxide, and composite tungsten oxide, and indium tin oxide is preferred. Indium tin oxide is a composite oxide (inorganic mixture) in which indium oxide ($In_2O_3$) contains a small amount of tin oxide ($SnO_2$).

The inorganic component is preferably transition metal-doped indium oxide, such as tin-doped indium oxide (ITO), zinc-doped indium oxide (IZO), tungsten-doped indium oxide, and tantalum-doped indium oxide. The inorganic component is preferably tin-doped indium oxide and tungsten-doped indium oxide, and more preferably tin-doped indium oxide. Tin-doped indium oxide and tungsten-doped indium oxide have a relatively large refractive index, and are therefore effective in reducing solar transmittance.

A molar ratio of tin with respect to a total amount of tin and indium in indium tin oxide [i.e., Sn/(Sn+In)] is preferably from 0.01 to 0.15, and more preferably from 0.04 to 0.12.

An average primary particle diameter of the inorganic particles is preferably 0.2 μm or less, more preferably 0.1 μm or less, from the viewpoint of improving the transparency (transmittance to visible light) of the heat ray shielding film.

The average primary particle diameter of the inorganic particles is calculated from a measured value of the specific surface area (BET) based on the following particle diameter formula:

$$a\ (\mu m) = 6 / (\rho \times B)$$

[a: average primary particle diameter, ρ: true specific gravity, B: specific surface area ($m^2/g$)]

It has been confirmed that the average primary particle diameter calculated from the specific surface area in this manner substantially corresponds to the average particle diameter directly observed using a transmission electron microscope. The specific surface area by the BET method is measured with an automatic specific surface area measuring device (for example, BELSORP manufactured by Microtrac).

A content of the inorganic particle in the heat ray shielding layer is preferably 50 % by mass or more, more preferably 60 % by mass or more, and even more preferably 70 % by mass or more. The content of inorganic particles in the heat ray shielding layer is preferably 95% by mass or less, more preferably 90% by mass or less.

The binder resin is not particularly limited, and a general organic resin used in transparent paint can be used, and a resin with excellent transparency is preferable. Examples of the binder resin include an acrylic resin, a polycarbonate resin, a polyvinyl chloride resin, a urethane resin, a melamine resin, an alkyd resin, a polyester resin, and an epoxy resin. The binder resin may be used singly or in combination of two or more types. Among them, the binder resin is preferably a cured product of an ultraviolet curing resin, and more preferably a cured product of an acrylic ultraviolet curing resin.

A content of the binder resin is preferably from 2 to 200 parts by mass, more preferably from 12 to 100 parts by mass, and even more preferably from 15 to 80 parts by mass, with respect to 100 parts by mass of the inorganic particle.

The heat ray shielding layer may contain an other component. Examples of the other component include a solvent, a dispersant, an ultraviolet curing initiator, and a leveling agent. In a case in which the heat ray shielding layer is formed using a coating liquid, the solvent used in the coating liquid is removed by drying, but may remain in the heat ray shielding layer. In addition, a resin binder precursor such as an ultraviolet curing resin may remain.

The solvent may be any solvent capable of dissolving or dispersing the resin binder or resin binder precursor, and examples of the solvent include an aromatic hydrocarbon such as benzene, toluene, and xylene; an alicyclic hydrocarbon such as cyclohexane; an aliphatic hydrocarbon such as hexane and octane; an ether, a ketone and an ester such as diacetone alcohol, diethylene glycol, butyl carbitol, isophorone, acetone, methyl ethyl ketone, methyl isobutyl ketone, cyclohexanone, 4-hydroxy-4-methyl-2-pentanone, and ethyl acetate; a halogenated hydrocarbon such as dichloromethane and carbon tetrachloride; an organic solvent containing two or more functional groups such as dimethylformamide, butyl carbitol acetate, and diethanolamine; and a monohydric or polyhydric alcohol such as methanol, ethanol, propanol, 2-propanol, butanol, 2-methyl-1-propanol, and ethylene glycol. The solvent may be used singly or in combination of two or more.

A ratio of a total amount of the binder resin and the inorganic particle in the heat ray shielding layer is preferably 90% by mass or more, more preferably 95% by mass or more, and even more preferably 98% by mass or more. The ratio of the total amount of the binder resin and inorganic particles in the heat ray shielding layer may be 100% by mass.

An average thickness of the heat ray shielding layer is preferably 1 μm or less, more preferably 0.9 μm or less,

and even more preferably 0.8 μm or less. The average thickness of the heat ray shielding layer is measured in the same manner as the average thickness of the substrate.

The heat ray shielding layer may be formed by applying a coating liquid containing the inorganic particle, the binder resin (or the binder resin precursor), the solvent, and the optionally other component. The coating liquid may be a dispersion or a solution. A content of the solvent in the coating liquid is set so as to obtain a viscosity suitable for the layer formation method to be applied, such as coating or printing. Typically, the solvent is contained in an amount of from 10 to 100 parts by mass with respect to 100 parts by mass of the inorganic particle, but this is not limited to the above amount. A content of the optionally other component is also adjusted as appropriate.

Example of a method of applying the coating liquid includes wet coating. Examples of wet coating include spin coating, bar coating, and gravure coating. Among these, spin coating and microgravure coating which allows application in small amounts are preferred.

After applying the coating liquid, it is dried to remove the solvent. In a case in which an ultraviolet-curable resin is used as the binder resin precursor, the ultraviolet-curable resin is cured by irradiating it with ultraviolet light to form a heat ray shielding layer.

(Adhesive layer and bonding layer)

The heat ray shielding film may have an adhesive layer or bonding layer at least between the heat ray shielding layer and the thermoplastic resin substrate A or between the heat ray shielding layer and the thermoplastic resin substrate B.

The adhesive layer can be formed using a known adhesive, and is preferably formed using an acrylic adhesive. The adhesive layer preferably contains an acrylic resin.

The acrylic resin is a polymer obtained by polymerizing a monomer containing at least one acrylic monomer selected from the group consisting of acrylic acid, methacrylic acid, and derivatives thereof. As the acrylic resin, those known as adhesives and pressure-sensitive adhesives can be used.

The acrylic resin preferably has a glass transition temperature (Tg) in the range of from -100 to +50°C. In a case in which the acrylic resin with a Tg in the above range is used, the adhesive strength is excellent in the normal temperature range.

From the viewpoint of adhesiveness, it is preferable that the acrylic adhesive contains at least one type of acrylic resin having a number average molecular weight of 500,000 or more, and it is more preferable that the acrylic adhesive contains at least one type of acrylic resin having a number average molecular weight of 800,000 or more.

The acrylic adhesive may contain an acrylic monomer in addition to the acrylic resin. Examples of the acrylic monomer include those mentioned above.

The acrylic adhesive may also be a two-component type acrylic adhesive including a main agent containing an acrylic resin having a functional group capable of serving as a crosslinking site, and a crosslinking agent that reacts with the crosslinking point.

As the acrylic resin serving as the main agent, a preferred copolymer is one obtained by copolymerizing, at a ratio such that the Tg falls within the above-mentioned range, monomer A including at least one alkyl ester of acrylic acid (alkyl group has 2 to 12 carbon atoms) such as ethyl acrylate, n-propyl acrylate, n-butyl acrylate, isobutyl acrylate, n-pentyl acrylate, 2-methylbutyl acrylate, n-hexyl acrylate, 2-ethylhexyl acrylate, n-octyl acrylate, isooctyl acrylate, n-nonyl acrylate or isononyl acrylate, and a monomer B including at least one functional group-containing acrylic monomer such as acrylic acid, methacrylic acid, acrylamide, N-methylol acrylamide, 2-hydroxyethyl acrylate, 2-hydroxyethyl methacrylate. A copolymerization ratio of the monomer A and the monomer B is preferably from 99.1/0.9 to 70/30, more preferably from 99.5/0.5 to 70/30, even more preferably from 99/1 to 75/25, and may be from, 99.5/0.5 to 80/20, in terms of the mass ratio of monomer A/monomer B.

A particularly preferred example of that acrylic resin composed of a copolymer of monomer A and monomer B is a copolymer obtained by copolymerizing butyl acrylate (BA) and acrylic acid (AA) at a mass ratio of BA/AA from 99.1/0.9 to 70/30, preferably from 99.5/0.5 to 80/20.

A main agent containing such a copolymer is commercially available. Examples thereof include the following SK-2094, SK-1310, and SK-1386 (all manufactured by Soken Chemical Industry Co., Ltd.).

SK-2094 (solid content of 25% by mass) is a mixture of an acrylic acid ester copolymer (BA/AA=96/4 (mass ratio)) and a methacrylic acid ester copolymer. A number average molecular weight of the mixture is 800,000, and a Tg is from -30 to -25°C. It is known that SK-2094 contains from 20 to 30% by mass of the mixture in total, from 60 to 70% by mass of ethyl acetate, from 1 to 10% by mass of toluene, from 1 to 10% by mass of methyl ethyl ketone, from 1 to 10% by mass of butyl acrylate, and less than 1% by mass of methyl acrylate.

It is known that SK-1310 (solid content: 33 % by mass) contains from 30 to 40 mass% of an acrylic acid ester copolymer (BA/AA = 90/10 (mass ratio), number average molecular weight: 500,000, Tg: from -50 to -45°C), from 40 to 50 mass% of ethyl acetate, and from 20 to 30 mass% of toluene.

It is known that SK-1386 (solid content 35% by mass) contains from 30 to 40% by mass of an acrylic acid ester copolymer (BA/AA = 92/8 (mass ratio), number average molecular weight: 500,000, Tg: from -50 to -45°C), from 30 to 40% by mass of ethyl acetate, and from 20 to 30% by mass of toluene.

Examples of the crosslinking agent include an epoxy-type crosslinking agent having two or more epoxy groups (e.g., product name: E-AX manufactured by Soken Chemical Industries, Ltd.); a metal chelate-type crosslinking agent such as an aluminum chelate agent (e.g., product name: M-5A manufactured by Soken Chemical Industries, Ltd.); and a polyisocyanate-type crosslinking agent having two or more isocyanate groups (e.g., product name: L-45 manufactured by Soken Chemical Industries, Ltd.). The crosslinking agent is appropriately selected depending on the type of functional group capable of serving as a crosslinking site. Among these, the epoxy-type crosslinking agent and the metal chelate-type crosslinking agent are preferred. The epoxy-type crosslinking agent and the metal chelate-type crosslinking agent have a long pot life and exhibit a slow increase in adhesive strength after lamination, thereby providing excellent workability such as repositioning of fluororesin-based adhesive film, and are less likely to discolor in weather resistance tests.

The bonding layer can be formed using a known bonding agent, and is preferably formed using a polyurethane adhesive. The bonding layer preferably contains a polyurethane resin.

The polyurethane resin is preferably a polyurethane resin made from a polycarbonate polyol (a1). The polyurethane resin is preferably a polyurethane resin (A1) obtained by reacting the polycarbonate polyol (a1), an alkylene diol chain extender (a2) (hereinafter sometimes referred to as "chain extender (a2)"), and an organic diisocyanate (a3), or a polyurethane resin (A2) obtained by reacting the polycarbonate polyol (a1) and an organic diisocyanate (a3).

Examples of the polycarbonate polyol (a1) include a polycarbonate polyol obtained by reacting a diol with a short-chain dialkyl carbonate.

Examples of the short-chain dialkyl carbonate include a dialkyl carbonate having an alkyl group with 1 to 4 carbon atoms, such as dimethyl carbonate and diethyl carbonate. The alkyl group in the dialkyl carbonate may have a straight-chain structure or a branched structure. The short-chain dialkyl carbonate may be used singly or in combination of two or more.

The diol is preferably a diol having a branched alkyl side chain from the viewpoint of improving the adhesive strength. Examples of the diol having a branched alkyl side chain include 2-methyl-1,3-propanediol, 3-methyl-1,5-pentanediol, 2,4-diethyl-1,5-pentanediol, and 2-butyl-2-ethyl-1,3-propanediol. In addition to the diol having a branched alkyl side chain, a diol not having a branched alkyl side chain, such as ethylene glycol, propylene glycol, 1,4-butanediol, 1,5-pentanediol, and 1,6-hexanediol, may also be used. The diol may be used singly or in combination of two or more kinds.

In the polycarbonate polyol (a1), a proportion of a structural unit derived from the diol having a branched alkyl side chain with respect to a total amount of structural units derived from the diol is preferably 20 mol% or more, and more preferably 30 mol% or more, from the viewpoint of adhesive strength.

A weight average molecular weight of the polycarbonate polyol (a1) is preferably from 400 to 8,000, and more preferably from 700 to 5,000. In a case in which the weight average molecular weight is equal to or greater than the lower limit, the solubility in practical synthetic solvents is improved. In a case in which the weight average molecular weight is equal to or less than the upper limit, sufficient adhesive strength is easily obtained, and practicality is improved.

A hydroxyl value of the polycarbonate polyol (a1) is preferably from 14 to 280 mg/KOH, and more preferably from 22 to 160 mg/KOH. In a case in which the hydroxyl value of the polycarbonate polyol (a1) is equal to or greater than the lower limit, the crosslinking reaction proceeds sufficiently, the molecular weight distribution of the product becomes narrow, and the hydrolysis resistance after crosslinking becomes better. In a case in which the hydroxyl value of the polycarbonate polyol (a1) is equal to or less than the upper limit, a bonding layer is easily flexible.

Examples of the chain extender (a2) include the same diols as those listed as diols forming the polycarbonate polyol (a1) and the diol having a branched alkyl side chain are preferred from the viewpoint of improving adhesive strength.

A molecular weight of the chain extender (a2) is preferably from 62 to 400. Preferred examples of the chain extender (a2) include ethylene glycol, propylene glycol, 1,4-butanediol, 1,5-pentanediol, 1,6-pentanediol, 1,6-hexanediol, 2-methyl-1,3-propanediol, 3-methyl-1,5-pentanediol, 2,4-diethyl-1,5-pentanediol, and 2-butyl-2-ethyl-1,3-propanediol.

In the chain extender (a2), a proportion of a structural unit derived from the diol having a branched alkyl side chain with respect to a total amount of structural units derived from the diol is preferably 5 mol% or more, and more preferably 20 mol% or more, from the viewpoint of adhesive strength.

Examples of the organic diisocyanate (a3) include an aromatic diisocyanates, an aliphatic diisocyanates, an alicyclic diisocyanates, and mixtures of two or more of these.

Examples of the aromatic diisocyanate include diphenylmethane diisocyanate, tetramethylxylylene diisocyanate, xylylene diisocyanate, tolylene diisocyanate, and a prepolymer of the aromatic diisocyanate with a low molecular weight glycol.

Examples of the aliphatic diisocyanate include 1,6-hexamethylene diisocyanate, 2,2,4-trimethylhexamethylene diisocyanate, lysine diisocyanate, and a prepolymer of the aliphatic diisocyanate with a low molecular weight glycol such as ethylene glycol and propylene glycol.

Examples of the alicyclic diisocyanate include isophorone diisocyanate, hydrogenated 4,4'-diphenylmethane diisocyanate, methylcyclohexylene diisocyanate, isopropylidenedicyclohexyl-4,4'-diisocyanate, and a prepolymer of the alicyclic diisocyanate with a low molecular weight glycol.

As the organic diisocyanate (a3), an aliphatic or alicyclic diisocyanate such as hydrogenated 4,4'-diphenylmethane diisocyanate, isophorone diisocyanate, and 2,2,4-trimethylhexamethylene diisocyanate are preferred from the viewpoint of excellent weather resistance.

It is preferred that the polyurethane resin has a hydroxyl group at a terminal.

In the polyurethane resin (A1), an equivalent ratio (NCO/OH) of a hydroxyl group of the polycarbonate polyol (a1) and a chain extender (a2) to an isocyanate group of the organic diisocyanate (a3) is preferably from 0.7 to 0.99, and more preferably from 0.8 to 0.97. In a case in which NCO/OH is equal to or greater than the lower limit, the adhesive strength and heat resistance are improved, and in a case in which it is equal to or less than the upper limit, a main agent having a sufficient amount of hydroxyl groups at the terminals is easily obtained.

In the polyurethane resin (A1), an amount of chain extender (a2) used is preferably from 0.5 to 50 parts by mass with respect to 100 parts by mass of polycarbonate polyol (a1). In a case in which the amount of chain extender (a2) used is equal to or greater than the lower limit, the adhesive strength is improved, and in a case in which it is equal to or less than the upper limit, the solubility in the synthetic solvent described below is improved.

In the polyurethane resin (A2), an equivalent ratio NCO/OH of a hydroxyl group of polycarbonate polyol (a1) to an isocyanate group of the organic diisocyanate (a3) is preferably from 0.7 to 0.99. In a case in which NCO/OH is equal to or greater than the lower limit, the adhesive strength and heat resistance are improved, and in a case in which it is equal to or less than the upper limit, a main agent having a sufficient amount of hydroxyl groups at the terminals is easily obtained.

A hydroxyl value of the polyurethane resin is preferably from 3 to 20 mg/KOH, and more preferably from 5 to 10 mg/KOH. In a case in which the hydroxyl value of the polyurethane resin is equal to or greater than the lower limit, a crosslinking reaction with the isocyanate used as a two-component type curing agent can be expected, and in a case in which it is equal to or less than the upper limit, the crosslinking reaction with the isocyanate used as the two-component type curing agent tends to occur uniformly within a relatively short time.

A weight-average molecular weight of the polyurethane resin is preferably from 4,000 to 50,000, more preferably from 8,000 to 15,000. In a case in which the weight-average molecular weight of the polyurethane resin is equal to or greater than the lower limit, the adhesive strength is improved, and in a case in which it is equal to or less than the upper limit, the solubility in the synthetic solvent described below is improved, resulting in excellent processability.

A reaction of the polycarbonate polyol (a1), the chain extender (a2), and the organic diisocyanate (a3) may be carried out without a solvent, or in a synthetic solvent that does not react with the isocyanate group. The reaction may also be carried out in the presence of a catalyst, if necessary. Reaction temperature is preferably from 60 to 150°C. Reaction time is preferably from 2 to 15 hours.

Examples of the synthetic solvent that does not react with the isocyanate group include an ester such as ethyl acetate, butyl acetate, and cellosolve acetate; a ketone such as acetone, methyl ethyl ketone, isobutyl ketone, and cyclohexanone; an ether such as tetrahydrofuran and dioxane; an aromatic hydrocarbon such as toluene and xylene; a halogenated hydrocarbon such as methylene chloride and ethylene chloride; and a sulfur-containing compound such as dimethyl sulfoxide and dimethyl sulfamide. The synthetic solvent can also be used as a dilution solvent after the synthesis of the main agent.

The polyurethane resin may be used singly or in combination of two or more types.

Examples of a curing agent for the polyurethane resin include a polyisocyanate. Examples of the polyisocyanate include adducts of the diisocyanates listed in the organic diisocyanate (a3) with the polyol, and an isocyanurate listed in the organic diisocyanate (a3), a biuret, and an allophanate, which have two or more isocyanate groups in one molecule.

Specific examples thereof include a polyfunctional organic polyisocyanate such as an adduct obtained by adding 3 moles of diisocyanate to 1 mole of trimethylolpropane, a biuret obtained by reacting 3 moles of diisocyanate with 1 mole of water, and an isocyanurate obtained by polymerization of 3 moles of diisocyanate.

Preferred as the curing agent is an isocyanurate that contains an isocyanurate ring structure and has an isocyanate group content of from 10% to 28% by mass. As the curing agent, a nurate of isophorone diisocyanate (IPDI) and/or hexamethylene diisocyanate (HDI) is particularly preferred.

The curing agent may be a blocked isocyanate in which the isocyanate group is blocked. Blocking of the isocyanate group can be performed with epsilon caprolactam (E-CAP), methyl ethyl ketone oxime (MEK-OX), methyl isobutyl ketone oxime (MIBK-OX), pyridine, triazine (TA), or the like.

The curing agent may be used singly, or in combination of two or more types.

The adhesive layer and the bonding layer may contain an ultraviolet absorbing agent. By containing an ultraviolet absorbing agent in the adhesive layer or the bonding layer, deterioration of the adhesive layer or the bonding layer over long-term use is suppressed. In addition, by arranging the adhesive layer or the bonding layer containing an ultraviolet absorbing agent on the sunlight side of the heat ray shielding layer, an amount of ultraviolet rays entering the heat ray shielding layer is reduced, and deterioration of the heat ray shielding layer during long-term use is suppressed.

In a case in which the adhesive layer or bonding layer contains an ultraviolet absorbing agent, it is sufficient that the ultraviolet absorbing agent is contained in at least one of the adhesive layer or the bonding layer between the heat ray shielding layer and the thermoplastic resin substrate A or between the heat ray shielding layer and the thermoplastic resin substrate B, and the ultraviolet absorbing agent may be contained in only one layer or in both layers.

The ultraviolet absorbing agent is not particularly limited, and it is preferable that it contains a triazine-type ultraviolet absorbing agent. The ultraviolet absorbing agent may be used singly or in combination of two or more types. A content of the triazine-type ultraviolet absorbing agent with respect to a total amount of the ultraviolet absorbing agent is preferably 80 % by mass or more, more preferably 90 % by mass or more, even more preferably 95 % by mass or more, and particularly preferably 99 % by mass or more.

As the triazine-type ultraviolet absorbing agent, triazine derivatives that are known as ultraviolet absorbing agents can be used, and is also available as a commercial product.

Preferred examples of the triazine-type ultraviolet absorbing agent include the following hydroxyphenyltriazine-type ultraviolet absorbing agents:

2-(2-hydroxy-4-[1-octyloxycarbonylethoxy]phenyl)-4,6-bis(4-phenylphenyl)-1,3,5-triazine (as a commercial product, TINUVIN 479 produced by BASF Japan Ltd.)

2,4-bis[2-hydroxy-4-butoxyphenyl]-6-(2,4-dibutoxyphenyl)-1,3,5-triazine (chemical formula (1) below. As a commercially available product, TINUVIN 460 produced by BASF Japan Ltd.)

2-[4-[(2-hydroxy-3-(2'-ethyl)hexyloxy]-2-hydroxyphenyl]-4,6-bis(2,4-dimethylphenyl)-1,3,5-triazine (chemical formula (2) below. As a commercially available product, TINUVIN 405 produced by BASF Japan Ltd.)

TINUVIN 477 produced by BASF Japan Ltd. This product is described on page 10 of the "Paint Additives Catalog" (Pub. No. CJ-005, issued in March 2008) by BASF Japan Ltd., and is known to be a mixture including approximately 80% of a hydroxyphenyltriazine-type ultraviolet absorbing agent of undisclosed structure and approximately 20% of a 1-methoxy-2-propyl acetate of undisclosed structure.

TINUVIN 400 produced by BASF Japan Ltd. This product is described on page 7 of the aforementioned "Paint Additives Catalog", and is known to be a reaction product (chemical formula (3) below) of 2-(4,6-bis(2,4-dimethylphenyl)-1,3,5-triazin-2-yl)-5-hydroxyphenyl and [(C10-C16, mainly C12-C13 alkyloxy)methyl]oxirane.

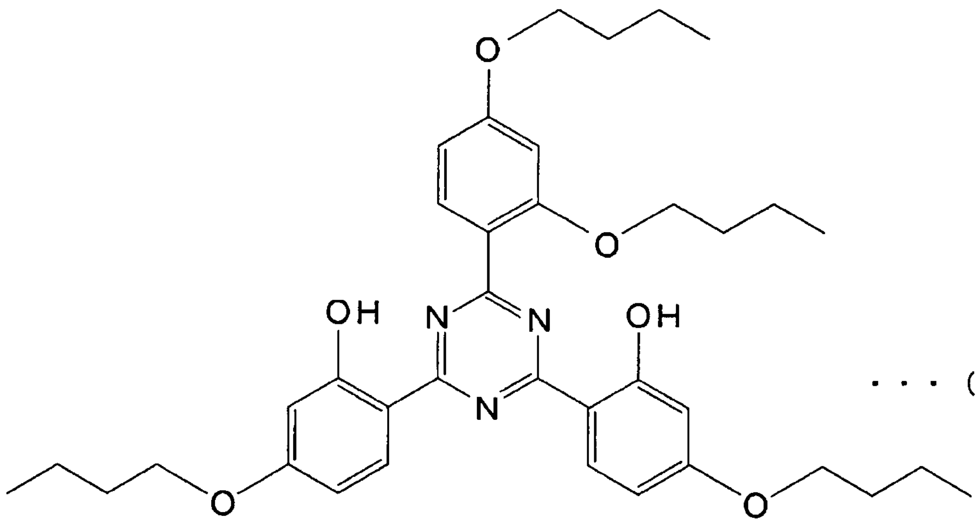

· · · (1)

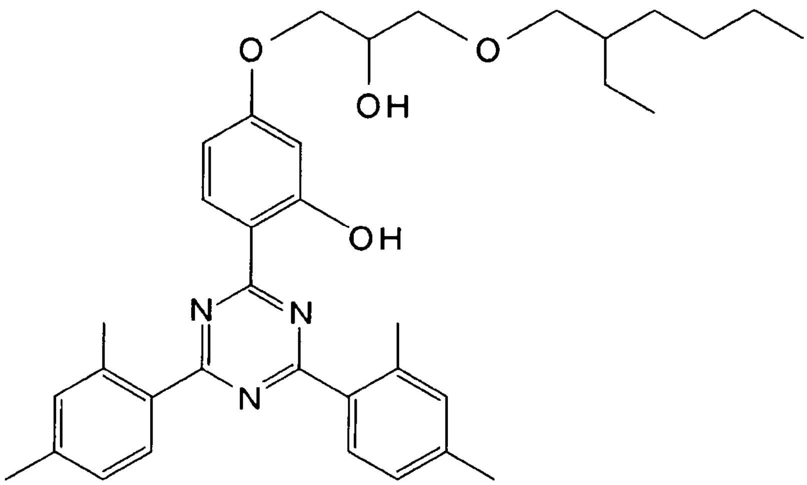

・・・ (2)

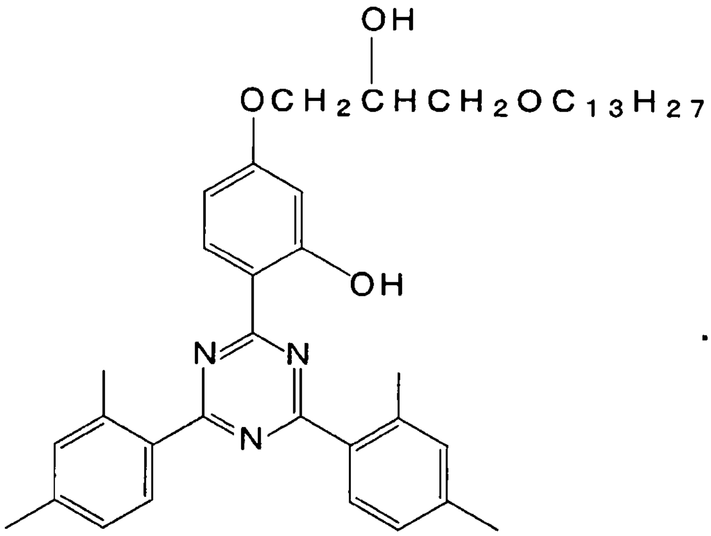

・・・ (3)

Preferred Examples of a triazine-based ultraviolet absorbing agent other than the hydroxyphenyltriazine-type ultraviolet absorbing agent include the following compounds:

2-[4,6-bis(2,4-dimethylphenyl)-1,3,5-triazin-2-yl]-5-(octyloxy)phenol (a commercially available product manufactured by Sun Chemical under the trade name: CYASORB UV-1164)
2-[2,6-di(2,4-xylyl)-1,3,5-triazin-2-yl]-5-octyloxyphenol (a commercially available product manufactured by Chemipro Chemical under the trade name: KEMISORB 102)

A content of the ultraviolet absorbing agent in the adhesive layer or the bonding layer is preferably set appropriately. For example, although it depends on a thickness of the adhesive layer or the bonding layer, an adhesive layer using an acrylic adhesive or a bonding layer using a polyurethane bonding agent, may contain from 3 to 10 parts by mass of an ultraviolet absorbing agent with respect to 100 parts by mass of a solid content of the acrylic adhesive or polyurethane bonding agent.

The adhesive layer or the bonding layer may further contain a light stabilizer. As the light stabilizer, a hindered amine light stabilizer and a hindered phenol light stabilizer are preferred. The light stabilizer may be used singly or in combination of two or more types. These may be known materials and are also commercially available.

Examples of the hindered amine light stabilizer include the following.

Bis(1,2,2,6,6-pentamethyl-4-piperidyl) [[3,5-bis(1,1-dimethylethyl)-4-hydroxyphenyl]methyl] butyl malonate (chemical formula (4) below, as a commercially available product, TINUVIN 144 produced by BASF Japan Ltd.)

TINUVIN 123 produced by BASF Japan Ltd. This product is listed on page 16 of the aforementioned "Paint Additives Catalog", and is known to be a reaction product (chemical formula (5) below) of decanedioic acid bis(2,2,6,6-tetramethyl-1-(octyloxy)-4-piperidinyl) ester (1,1-dimethylethyl hydroperoxide) and octane.

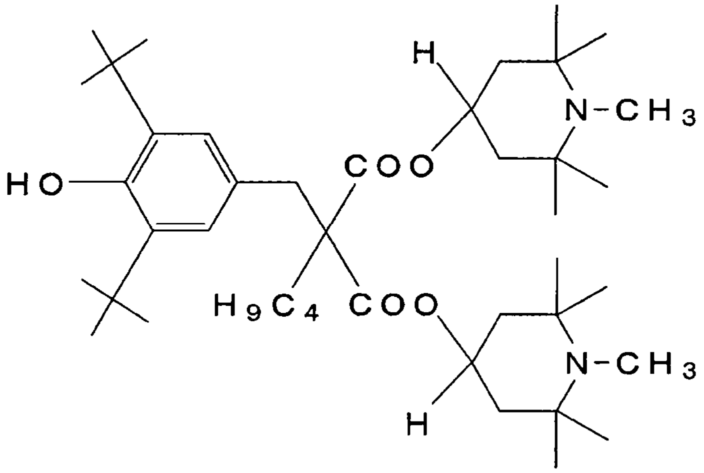

· · · (4)

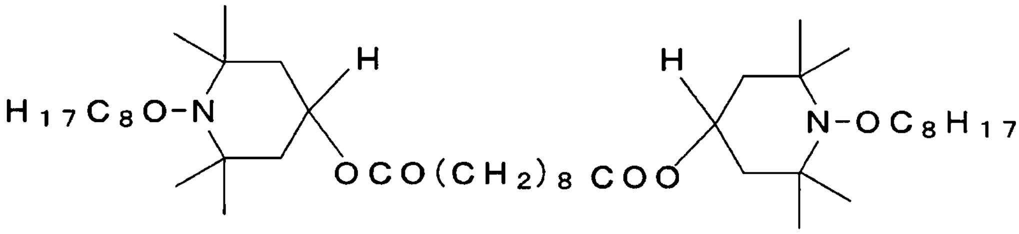

· · · (5)

Examples of the hindered phenol light stabilizer include pentaerythritol-tetrakis-[3-(3',5'-di-t-butyl-4'-hydroxyphenyl)propionate] (chemical formula (6) below, as a commercially available product, IRGANOX 1010 produced by BASF Japan Ltd).

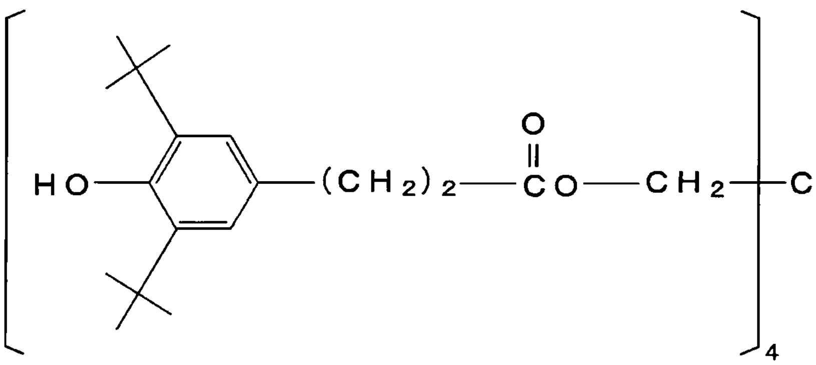

· · · (6)

In a case in which the light stabilizer is contained in the adhesive layer or the bonding layer, a content of the light stabilizer is preferably set appropriately. For example, in an adhesive layer using an acrylic adhesive or a bonding layer using a polyurethane bonding agent, a content is preferably from 0.1 to 4.0 parts by mass, and more preferably from 0.5 to 2.0 parts by mass, with respect to 100 parts by mass of a solid content of the acrylic adhesive or the polyurethane bonding agent.

(Anti-drip layer)

The heat ray shielding film preferably has an anti-drip layer on the outer surface of at least one of the thermoplastic resin substrate A or the thermoplastic resin substrate B. In a case in which the heat ray shielding film is applied to an agricultural greenhouse, it is preferable to provide an anti-drip layer on at least the surface of the thermoplastic resin substrate placed on the inner layer of the agricultural greenhouse.

The anti-drip layer is a layer for preventing water vapor generated from plants, animals, soil or the like from undergoing condensation into large water droplets due to being cooled on the surface of the film. In a case in which the anti-drip layer is provided, the condensed water vapor is prevented from forming droplets on the surface of film, and allowing it to

spread as a water film, thereby reducing interference with the transmission of sunlight.

In an agricultural greenhouse in which an agricultural film provided with the anti-drip layer is installed, a surface temperature of the film tends to rise during sunny and cloudy periods in winter when the sunlight is present, making condensation likely to occur and allowing any condensation to end in a short time. Therefore, an agricultural film provided with the anti-drip layer exhibits the effect of maintaining a high transmittance of visible light necessary for photosynthesis even when installed in an agricultural greenhouse. In addition, the agricultural film provided with an anti-drip agent also exhibits a condensation-preventing effect not only during the daytime, but also at night when the surface temperature decreases.

The anti-drip layer can be formed by an anti-drip agent. The anti-drip agent is not particularly limited, and any known one may be used. As the anti-drip agent, for example, one containing a hydrophilic inorganic fine particle (an average particle size of about 0.01 μm) such as a silica fine particle and an alumina fine particle is preferable, and a mixture of a silica fine particle and a boehmite fine particle is more preferable. As the anti-drip agent, a dispersion of the inorganic fine particle in a silane coupling agent or a binder such as polyvinyl alcohol (PVA) is generally used. The anti-drip agent may contain a solvent such as ion-exchanged water. It may also contain a pH adjuster such as nitric acid.

Examples of the anti-drip agent include a composition described in JP-A No. 2007-099884 A.

A coating amount of the anti-drip agent is preferably such that the solid content layer is about 0.2 to 1.0 $g/m^2$.

A water contact angle of a surface of the anti-drip layer is preferably 40 degrees or less, and more preferably from 5 to 20 degrees.

In a case in which the anti-drip layer is provided, it is preferable to perform a surface treatment on the thermoplastic resin substrate to which the anti-drip agent is applied in order to improve the applicability of the anti-drip agent. The surface treatment is not particularly limited, and examples thereof include corona discharge treatment, plasma discharge treatment, ozone treatment, flame treatment, chemical conversion treatment, and primer treatment. Corona discharge treatment is more preferable as the surface treatment.

The primer treatment may be carried out using a primer treatment liquid. The primer treatment liquid preferably contains aminosilane. The primer treatment liquid may further contain a leveling agent, a solvent, or the like.

(Physical properties of heat ray shielding film)

A visible light transmittance of the heat ray shielding film in the present disclosure is preferably 85% or more, and more preferably 87% or more. Although a higher visible light transmittance is preferable, a visible light transmittance of 85% or more provides excellent transparency, and, for example, in a case in which the heat ray shielding film is used in an agricultural greenhouse, it may effectively promote the growth of cultivated plants.

The visible light transmittance of the heat ray shielding film in the present disclosure is 100% or less.

The visible light transmittance in the present disclosure refers to the ratio of the transmitted luminous flux to the incident luminous flux of daylight entering perpendicularly to the surface of a substrate such as glass. Daylight refers to CIE daylight as defined by the International Commission on Illumination (abbreviated as CIE). In CIE daylight, based on observation data, the spectral illuminance distribution of daylight having the same color temperature as blackbody radiation is expressed as a relative value with respect to a value of the wavelength of 560 nm. The luminous flux is defined as the value obtained by integrating, over wavelength, the product of the radiant flux at each wavelength and the corresponding visibility function. (see Japanese Industrial Standards JIS Z 8113:1998 and JIS Z 8120:2001). Visible light transmittance is measured in accordance with DIN EN 410 1998.

A solar transmittance of the heat ray shielding film in the present disclosure is preferably 82% or less, and more preferably 80% or less. Although a lower solar transmittance is preferable, in a case in which the solar transmittance is 82% or less, solar radiation can be blocked, and an increase in indoor temperature can be suppressed. The solar transmittance of the heat ray shielding film is preferably 70% or more, and more preferably 72% or more, from the viewpoint of suppressing an excessive decrease in indoor temperature during winter.

The solar transmittance in the present disclosure refers to the ratio of the transmitted radiant flux to the incident radiant flux of solar radiation entering perpendicularly to the surface of a substrate such as glass. The term "solar radiation" refers to direct solar radiation, that is, radiation in the near ultraviolet, visible, and near infrared wavelength range (from 300 to 2500 nm) that directly reaches the ground after passing through the atmosphere. The solar transmittance is measured in accordance with DIN EN 410:1998.

The solar transmittance after exposure treatment of the heat ray shielding film in the present disclosure is preferably 80% or less, and more preferably 75% or less. Although a lower solar transmittance after exposure treatment is preferable, in a case in which the solar transmittance is 82% or less, solar radiation can be blocked, and an increase in indoor temperature can be suppressed even after long-term use. The solar transmittance after exposure treatment of the heat ray shielding film is preferably 70% or more, and more preferably 72% or more, from the viewpoint of suppressing an excessive decrease in indoor temperature during winter even after long-term use.

In the present disclosure, exposure treatment refers to exposure for 5000 hours using an open-frame carbon arc

lamp in accordance with JIS K7350-4:2008.

In the heat ray shielding film in the present disclosure, a ratio of the solar transmittance after exposure treatment to the solar transmittance before exposure treatment is preferably 1.05 or less, and more preferably 1.01 or less. In a case in which the ratio of the solar transmittance after exposure treatment to the solar transmittance before exposure treatment is low, the increase in the solar transmittance is suppressed, and the heat ray shielding film in the present disclosure exhibits excellent long-term heat shielding performance. From the viewpoint of suppressing excessive decrease in indoor temperatures during winter in the case of long-term use, the ratio of the solar transmittance of the heat ray shielding film after exposure treatment to the solar transmittance before exposure treatment is preferably 0.95 or more.

In the heat ray shielding film in the present disclosure, a value of (visible light transmittance - solar transmittance) / visible light transmittance $\times$ 100 is preferably 10% or more, more preferably 15% or more, and even more preferably 17.5% or more.

While it is preferable to increase the value of visible light transmittance and also to increase the difference between the visible light transmittance and the solar transmittance, in a case in which the value is 10% or more, excellent visible light transparency and excellent heat ray shielding properties can be achieved.

In the heat ray shielding film in the present disclosure preferably, (visible light transmittance - solar transmittance) / visible light transmittance $\times$ 100 is preferably 25% or less, and more preferably 20% or less.

In the heat ray shielding film in the present disclosure, it is preferable that the value of (visible light transmittance - solar transmittance) / visible light transmittance $\times$ 100 is 10% or more, and the ratio of the solar transmittance after exposure treatment to the solar transmittance before exposure treatment is 1.05 or less.

The heat ray shielding film in the present disclosure has excellent visible light transparency, heat ray shielding properties, and weather resistance, and therefore, the value of (visible light transmittance - solar transmittance) / visible light transmittance $\times$ 100 and the ratio of the solar transmittance after exposure treatment to the solar transmittance before exposure treatment tend to fall within the above range.

A lower limit of a haze of the heat ray shielding film in the present disclosure is 0%.

The haze of the heat ray shielding film in the present disclosure is preferably 15% or less, and more preferably 10% or less. A lower haze leads to improved appearance quality.

In the present disclosure, the haze is measured in accordance with DIN EN 410:1998.

In the present disclosure, a lower limit of a haze of the heat ray shielding film after exposure treatment is 0%.

In the present disclosure, the haze of the heat ray shielding film after exposure treatment is preferably 25% or less, more preferably 15% or less, and even more preferably 10% or less. In such a case, the heat ray shielding film in the present disclosure has excellent long-term durability.

In the present disclosure, a ratio of the haze of the heat ray shielding film after exposure treatment to the haze of the film before exposure treatment is preferably 4.00 or less, more preferably 1.20 or less, and even more preferably 1.15 or less. In a case in which the ratio of the haze of the film after exposure treatment to the haze of the film before exposure treatment is low, an increase in haze is suppressed, and the heat ray shielding film of the present disclosure exhibits excellent long-term durability. The ratio of the haze of the heat ray shielding film after the exposure treatment to the haze before the exposure treatment is preferably 0.90 or more.

The heat ray shielding film in the present disclosure may have an uneven structure on at least one surface. By providing an uneven structure on the surface of the heat ray shielding film, light can sufficiently reach crops located near the ground. In particular, during winter mornings, the duration of sunlight is shot and intensity of solar radiation is weak, often resulting in insufficient light. Therefore, the heat ray shielding film having such a configuration is useful.

The arithmetic mean roughness Ra of the surface having the uneven structure is preferably from 0.3 to 3.0 $\mu$m, more preferably from 0.8 to 3.0 $\mu$m, and even more preferably from 1.0 to 2.5 $\mu$m. A depth of the unevenness may be set to a shallow level, in this case, the Ra is preferably from 0.3 to 2.0 $\mu$m, more preferably from 0.8 to 1.8 $\mu$m, and even more preferably from 1.0 to 1.6 $\mu$m. On the other hand, the depth of the unevenness may be set to a deep level, in this case, the Ra is preferably from 0.6 to 3 $\mu$m, more preferably from 1.7 to 3 $\mu$m, and even more preferably from 1.8 to 2.5 $\mu$m.

A maximum height roughness Rz of the surface having the uneven structure is preferably from 1 to 25 $\mu$m, more preferably from 4 to 25 $\mu$m, and even more preferably from 4 to 22 $\mu$m. In a case in which the depth of the unevenness is set to a shallow level, the Rz is preferably from 1 to 8 $\mu$m, more preferably from 4 to 7 $\mu$m, and even more preferably from 4 to 6 $\mu$m. In a case in which the depth of the unevenness is set to a deep level, the Rz is preferably from 13 to 25 $\mu$m, more preferably from 15 to 25 $\mu$m, and even more preferably from 18 to 22 $\mu$m.

The arithmetic mean roughness Ra and the maximum height roughness Rz refer to values measured by the method described in JIS B0601:2013 (ISO4287:1997, Amd.1:2009).

Examples of the layer structure of the heat ray shielding film in the present disclosure are given below, however, the layer structure of the heat ray shielding film in the present disclosure is not limited thereto.

(1) Thermoplastic resin substrate A/heat ray shielding layer/thermoplastic resin substrate B
(2) Thermoplastic resin substrate A/heat ray shielding layer/thermoplastic resin substrate B/anti-drip layer

(3) Thermoplastic resin substrate A/adhesive layer or bonding layer/heat ray shielding layer/thermoplastic resin substrate B
(4) Thermoplastic resin substrate A/adhesive layer or bonding layer/heat ray shielding layer/thermoplastic resin substrate B/anti-drip layer
(5) Thermoplastic resin substrate A/heat ray shielding layer/adhesive layer or bonding layer/thermoplastic resin substrate B/anti-drip layer

In a case in which an anti-drip layer is provided on the thermoplastic resin substrate B as in layer structures (2), (4) and (5), it is preferable to provide an undercoat layer (primer treatment layer) between the thermoplastic resin substrate B and the anti-drip layer.
In a case in which a heat ray shielding film having an anti-drip layer as in layer structures (2), (4) and (5) is applied to an agricultural greenhouse, the anti-drip layer may be disposed on either the indoor side or the sunlight side.
In a case in which the adhesive layer or the bonding layer is provided as in layer structures (3) to (5) and the adhesive layer or the bonding layer contains the ultraviolet absorbing agent, the adhesive layer or the bonding layer may be disposed on either the indoor side or the sunlight side of the heat ray shielding layer. In a case in which the heat ray shielding film is installed so that the adhesive layer or the bonding layer is on the sunlight side of the heat ray shielding layer, that is, so that the thermoplastic resin substrate A side is on the sunlight side, damage to the heat ray shielding layer by ultraviolet rays is suppressed. In a case in which the heat ray shielding film is installed so that the adhesive layer or the bonding layer is on the indoor side of the heat ray shielding layer, that is, so that the thermoplastic resin substrate B side is on the sunlight side, damage to the adhesive layer or the bonding layer by ultraviolet rays is suppressed.
In a case in which one of the thermoplastic resin substrates A or B contains a fluororesin and the other contains a resin other than fluororesin, the thermoplastic resin substrate containing the fluororesin may be located on either the indoor side or the sunlight side, and is preferably located on the sunlight side.
The heat ray shielding film in the present disclosure is suitable for use in window materials for architecture, roofing materials, window materials for ships, window materials for aircraft, window materials for vehicles, agricultural applications such as agricultural greenhouses, and the like.

<Method of producing heat ray shielding film>

A method of producing the heat ray shielding film in the present disclosure is not particularly limited as long as the above-mentioned heat ray shielding film is obtained.
A surface of the thermoplastic resin substrate facing the heat ray shielding layer may be surface-treated in advance. The surface treatment is not particularly limited, and examples thereof include a corona discharge treatment, a plasma discharge treatment, an ozone treatment, a flame treatment, a chemical conversion treatment, and a primer treatment. The Corona discharge treatment is more preferable as the surface treatment.
In a case in which the coating liquid for forming the heat ray shielding layer contains an ultraviolet curable resin as a binder resin precursor, it is preferable to coat the coating liquid on the thermoplastic resin substrate, dry the resulting coating film to remove the solvent, and then irradiate ultraviolet light to cure the ultraviolet curable resin, thereby forming the heat ray shielding layer. Examples of a timing for curing the ultraviolet curable resin includes the following (1) and (2).

(1) After curing the ultraviolet curable resin to form the heat ray shielding layer, the other thermoplastic resin substrate is placed on the heat ray shielding layer.
(2) Before curing the ultraviolet curable resin, the other thermoplastic resin substrate is placed on the coating film formed with the coating liquid for the heat ray shielding layer to produce a layered body, and then irradiate the layered body with ultraviolet light from the outside to cure the ultraviolet curable resin.

In the case of the producing method (1), it is preferable to provide an adhesive layer or a bonding layer between the heat ray shielding layer and the other thermoplastic resin substrate. In this case, an adhesive or a bonding agent may be applied to the other thermoplastic resin substrate to form an adhesive layer or a bonding layer, and the heat ray shielding layer on the thermoplastic resin substrate and the adhesive layer or the bonding layer on the other thermoplastic resin substrate may be laminated so as to be in contact with each other.
In the case of the producing method (2), an adhesive layer or a bonding layer may or may not be provided between the heat ray shielding layer and the other thermoplastic resin substrate. From the viewpoint of workability, manufacturing cost, or the like, it is preferable not to provide an adhesive layer or a bonding layer in the case of the producing method (2).
In addition, in the case of the producing method (2), in a case in which a thermoplastic resin substrate containing an ultraviolet absorbing agent and a thermoplastic resin substrate not containing an ultraviolet absorbing agent are used, it is preferable to irradiate ultraviolet rays from the side of the thermoplastic resin substrate that does not contain an ultraviolet absorbing agent, thereby curing the ultraviolet-curable resin.

<Agricultural greenhouse>

An agricultural greenhouse in the present disclosure includes the heat ray shielding film in the present disclosure. In a case in which the heat ray shielding film is in the form of a film, examples of the agricultural greenhouse include a pipe house in which the heat ray shielding film is stretched so as to cover the entire surface or the upper surface of the frame of the agricultural greenhouse. In a case in which the heat ray shielding film is in the form of a sheet or plate, examples of the agricultural greenhouse include one in which the periphery of the heat ray shielding film is surrounded by a frame or the like and the film is attached to an upper surface or a side surface of the agricultural house.

The agricultural greenhouse provided with the heat ray shielding film in the present disclosure can maintain its heat ray reflectivity over a long period of time, and thus can suppress an increase in indoor temperature, particularly during the long daylight periods in summer, thereby reducing the cooling load. In a case in which plants are cultivated in an agricultural greenhouse, the leaf temperature of the plants is less likely to become excessively high even during the daytime in summer, so that growth inhibition is less likely to occur. Accordingly, the greenhouse is suitable for the forcing culture of fruit vegetables such as solanaceous crops including eggplants, tomatoes, green peppers, and chili peppers; cucurbitaceous crops such as cucumbers, pumpkins, gourds, zucchinis, melons, and watermelons; and malvaceous crops such as okra. Therefore, it is particularly preferably used in agricultural greenhouses for plant cultivation.

EXAMPLES

The present invention will be described in detail below with examples and comparative examples, but the present invention is not limited to these examples.

[Example 1]

One surface of an ETFE film having a thickness of 100 μm (the composition of ETFE being TFE units / E units / PFBE units = 54 / 46 / 1.3 (molar ratio), with a melting point of 260°C and an MFR of 11.5 g/10 min) was subjected to corona discharge treatment. Thereafter, onto the corona-treated surface, an ITO dispersion was applied by a microgravure coating method at a line speed of 5 m/min, and dried at 80°C to obtain a dried film as a precursor of a heat ray shielding layer. As the ITO dispersion, a commercially available product "PI-3" (mass ratio of ITO : acrylic resin = 74:46) manufactured by Mitsubishi Materials Electronic Chemicals Co., Ltd. was used.

The dried film obtained above was irradiated with a mercury lamp at 160 W to form a heat ray shielding layer having an average thickness of 0.8 μm. Subsequently, the surface of the resulting heat ray shielding layer was subjected to corona discharge treatment, followed by application of a primer treatment solution to form an undercoat layer having a thickness of 0.03 μm. As the primer treatment solution, a solution containing 1 part by mass of an aminosilane (product name: "KBM903", manufactured by Shin-Etsu Chemical Co., Ltd.), 0.05 parts by mass of a leveling agent (product name: "Sunphenol 420", manufactured by Shin-Etsu Chemical Co., Ltd.), and 98.95 parts by mass of industrial ethanol (product name: "Solmix AP-1", manufactured by Japan Alcohol Trading Co., Ltd.) was used.

On the undercoat layer, anti-drip agent 1 was gravure-coated so that the coating amount would be 0.45 $g/m^2$, and dried at 80°C to form an anti-drip layer having a thickness of 0.45 μm. As anti-drip agent 1, a mixture of Liquid 1 and Liquid 2 in a mass ratio of 27.3:72.7 was used.

Liquid 1: To 16.1 parts by mass of ion-exchanged water, 1.5 parts by mass of 1N nitric acid was added, and while stirring, 9.7 parts by mass of silica sol (product name: "Snowtex (registered trademark) S" manufactured by Nissan Chemical Corporation; pH: 10; solid content concentration: 30% by mass) was added. After continuing the stirring for 30 minutes, the resulting mixture was allowed to stand at room temperature (25°C) for one day to prepare Liquid 1.

Liquid 2: To 2.7 parts by mass of ion-exchanged water, 2 parts by mass of 1N nitric acid was added, and while stirring, 50 parts by mass of industrial ethanol (product name: "Solmix AP-1", manufactured by Japan Alcohol Trading Co., Ltd.), 17.8 parts by mass of boehmite (product name: "KX-1485", manufactured by K.I. Chemical Industry Co., Ltd.; pH: 4.0; solid content concentration: 20% by mass), and 0.2 parts by mass of aminosilane (product name: "KBM903", manufactured by Shin-Etsu Chemical Co., Ltd.) were added. After continuing the stirring for 30 minutes, the resulting mixture was allowed to stand at room temperature (25°C) for approximately one day to prepare Liquid 2.

As a result of the above, a test specimen with a layer structure of ETFE layer (thickness 100 μm) / heat ray shielding layer / anti-drip layer was obtained. The obtained test specimen was evaluated as follows. The results are shown in Table 1.

(Visible light transmittance (%), solar transmittance (%), haze)

Immediately after production, the visible light transmittance (%), solar transmittance (%), and haze were measured for the test specimens using a UV-PC3600 measuring device manufactured by Shimadzu Corporation in

accordance with DIN EN 410 1998. From these values, the value of (visible light transmittance - solar transmittance) / visible light transmittance × 100 was calculated.

Separately, the obtained test specimens were cut into pieces measuring 5 cm × 3 cm to prepare evaluation samples. These evaluation samples were exposed to an open-frame carbon arc lamp for 5,000 hours in accordance with JIS K7350-4:2008 using an accelerated weather resistance test device (product name: Sunshine Weather Meter S80, manufactured by Suga Test Instruments Co., Ltd.). Ultraviolet irradiation of the test specimen was performed from the ETFE layer side.

For the evaluation samples after exposure, the visible light transmittance (after exposure) (%), solar transmittance (after exposure) (%), and haze (after exposure) were measured in the same manner as above.

For visible light transmittance, in a case in which a ratio of the value after exposure to the initial value was 0.94 or more, the evaluation was defined as A; and in a case in the ratio was less than 0.94, the evaluation was defined as B.

For solar transmittance, in a case in which a ratio of the value after exposure to the initial value was 1.05 or less and the solar transmittance was 80% or less, the evaluation was defined as A, and in a case in which the ratio of the value after exposure to the initial value was more than 1.05 or the solar transmittance was more than 80%, the evaluation was defined as B.

For haze, in a case in which a ratio of the value after exposure to the initial value was 1.2 or less, the evaluation was defined as A, and in a case in which it was more than 1.2, the evaluation was defined as B.

(Appearance, abrasion resistance)

An appearance of the test specimen after 5000 hours of exposure was visually confirmed. In a case in which there were no cracks, the evaluation was defined as A, and in a case in which there were cracks, the evaluation was defined as B.

Furthermore, an abrasion resistance of the test specimen after 5000 hours of exposure was visually confirmed. In a case in which there was no hazed portion, the evaluation was defined as A, and in a case in which there was hazed portion, the evaluation was defined as B.

[Example 2]

An ETFE film having a thickness of 100 μm (hereinafter referred to as "Film 1") and an ETFE film having a thickness of 50 μm (hereinafter referred to as "Film 2") were prepared. Both films had the same ETFE composition, namely TFE units / E units / PFBE units = 54 / 46 / 1.3 (molar ratio), a melting point of 260°C, and an MFR of 11.5 g/10 min. Each of Films 1 and 2 was subjected to surface treatment by corona discharge on one surface to achieve a surface wetting index of 40 mN/m. The surface wetting index in the present disclosure refers to a value measured in accordance with JIS K6768:1999 using a surface wetting index test solution manufactured by FUJIFILM Wako Pure Chemical Corporation.

Subsequently, an adhesive composition was applied to the surface-treated side of film 2 with an applicator so that the coating thickness after drying would be 25 μm, and the composition was dried at 70°C for 5 minutes to form an adhesive layer.

As the adhesive composition, a mixture was used which contained 100 parts by mass of SK-2094 (manufactured by Soken Chemical & Engineering Co., Ltd.; solid content: 25% by mass), 1 part by mass of a crosslinking agent M-5A (manufactured by Soken Chemical & Engineering Co., Ltd.; solid content: 100% by mass), 5 parts by mass of an ultraviolet absorbing agent (product name: "TINUVIN 479", manufactured by BASF Japan Ltd.), and 1.5 parts by mass of a light stabilizer (product name: "HALS 123", manufactured by BASF Japan Ltd.).

The surface-treated side of film 1 was placed onto the resulting adhesive layer using a hand roller so as to avoid air bubbles. In this manner, a test specimen having a layered structure of ETFE layer (thickness: 100 μm) / adhesive layer / ETFE layer (thickness: 50 μm) was obtained.

The test specimen of Example 2 was evaluated in the same manner as the test specimen of Example 1. The ultraviolet irradiation of the test specimen was performed from the ETFE layer side having a thickness of 100 μm. The results are shown in Table 1.

[Example 3]

In the same manner as in Example 1, except that an ETFE film having a thickness of 50 μm was used and anti-drip agent 1 was not applied to prepare an intermediate 1 having a layer structure of ETFE layer / heat ray shielding layer (with surface treatment). Separately, in the same manner as in Example 2, an adhesive layer was formed on Film 2 to prepare an intermediate 2 having a layer structure of ETFE layer / adhesive layer.

Then, the two intermediates were laminated such that the heat ray shielding layer of intermediate 1 and the adhesive layer of intermediate 2 were in contact with each other. In this way, a test specimen having a layer structure of ETFE layer (thickness: 50 μm) / adhesive layer / heat ray shielding layer / ETFE layer (thickness: 50 μm) was obtained.

The test specimen of Example 3 was evaluated in the same manner as the test specimen of Example 1. Ultraviolet irradiation of the test specimen was performed from the side of the ETFE layer that was in contact with the adhesive layer. The results are shown in Table 1.

[Example 4]

In the same manner as in Example 3, except that ETFE film having a thickness of 50 μm used in the preparation of intermediate 1 was replaced with an ETFE film having a thickness of 100 μm to prepare a test specimen having a layer structure of ETFE layer (thickness: 50 μm) / adhesive layer / heat ray shielding layer / ETFE layer (thickness: 100 μm). Ultraviolet irradiation of the test specimen was performed from the side of the ETFE layer (thickness: 100 μm) that was in contact with the heat ray shielding layer. The results are shown in Table 1.

[Example 5]

In the same manner as in Example 4, a test specimen with a layer structure of ETFE layer (thickness 100 μm) / heat ray shielding layer / adhesive layer / ETFE layer (thickness 50 μm) was prepared. Subsequently, the outer surface of the ETFE layer (50 μm thick) of the test specimen was subjected to corona discharge treated, followed by primer treatment. Then, anti-drop agent 1 was gravure coated thereon so that a coating amount would be 0.45 g/$m^2$, and dried at 80°C. The primer treatment liquid and anti-drop agent used were the same as those used in Example 1. In this manner, a test specimen having a layered structure of ETFE layer (thickness: 100 μm) / heat ray shielding layer / adhesive layer / ETFE layer (thickness: 50 μm) /anti-drip layer.

The test specimen of Example 5 was evaluated in the same manner as the test specimen of Example 1. The ultraviolet irradiation of the test specimen was performed from the ETFE layer side having a thickness of 100 μm. The results are shown in Table 1.

[Example 6]

An ETFE film having a thickness of 100 μm (hereinafter referred to as "Film 1") and an ETFE film having a thickness of 25 μm (hereinafter referred to as "Film 3") were prepared. Both films had the same ETFE composition, namely TFE units / E units / PFBE units = 54 / 46 / 1.3 (molar ratio), a melting point of 260°C, and an MFR of 11.5 g/10 min. Film 1 was subjected to surface treatment by corona discharge on one surface, and Film 3 was subjected to surface treatment by corona discharge on both surfaces.

An ITO dispersion liquid identical to that used in Example 1 was applied to the surface-treated side of Film 1 by microgravure coating at a line speed of 5 m/min, and immediately after drying at 80°C, Film 3 was placed on the coated side and laminated by roll press. The resulting laminate was then irradiated with a mercury lamp at 160 W to cure the precursor layer of the heat ray shielding layer to form the heat ray shielding layer. The average thickness of the heat ray shielding layer was 0.8 μm. In this manner, a layered body having a layered structure of ETFE layer (thickness: 100 μm) / heat ray shielding layer / ETFE layer (thickness: 25 μm) was obtained.

Next, the outer surface on the film 3 of the layered body was subjected to the same primer treatment as in Example 1, and anti-drip agent 1, identical to that used in Example 1, was gravure-coated thereon so that the coating amount would be 0.45 g/$m^2$, followed by drying at 80°C. In this manner, a test specimen having a layered structure of ETFE layer (thickness: 100 μm) / heat ray shielding layer / ETFE layer (thickness: 25 μm) / anti-drip layer was obtained.

The test specimen of Example 6 was evaluated in the same manner as the test specimen of Example 1. The ultraviolet irradiation of the test specimen was performed from the ETFE layer side having a thickness of 100 μm. The results are shown in Table 1.

[Example 7]

In the same manner as in Example 6, except that the ETFE film having a thickness of 100 μm was replaced with a 100 μm-thick ETFE film in which an ultraviolet absorbing agent had been kneaded, a test specimen having a layered structure of ETFE layer (thickness: 100 μm, containing an ultraviolet absorbing agent) / heat ray shielding layer / ETFE layer (thickness: 25 μm) / anti-drip layer was obtained. As the ultraviolet absorbing agent, composite particles of amorphous silica-cerium oxide-silica (Nihon Inorganic Chemical Co., Ltd., Celigard S-3018-02, average particle size 2.2 μm) were used, and a content of the ultraviolet absorbing agent in the ETFE film was set to 0.63 % by mass.

The test specimen of Example 7 was evaluated in the same manner as the test specimen of Example 1. The results are shown in Table 1.

[Example 8]

An intermediate 1 having a layer structure of ETFE layer / heat ray shielding layer (with surface treatment) was prepared without applying anti-drip agent 1, using the same method as in Example 1. Separately, an adhesive layer was formed on film 2 to prepare an intermediate 2 having a layer structure of ETFE layer / adhesive layer.

Then, the heat ray shielding layer of intermediate 1 and the adhesive layer of intermediate 2 were laminated so as to be in contact with each other, and pressed using a laminating roll with a nip temperature maintained at 70°C, and followed by curing at 40°C for 48 hours. In this manner, a test specimen having a layered structure of ETFE layer (thickness: 100 μm) / heat ray shielding layer / adhesive layer (thickness: 10 μm) / ETFE layer (thickness: 25 μm) was obtained.

The adhesive layer was formed using an adhesive composition which is prepared by mixing 100 parts by mass (solid content) of HD-1013 (product name: "HD-1013", solid content: 60% by mass, manufactured by Rock Paint Co., Ltd.), which is a polyurethane resin as a main agent, 18.8 parts by mass (solid content) of H-62 (isocyanate content: 10% by mass, solid content: 75% by mass, manufactured by Rock Paint Co., Ltd.) as a curing agent, 7 parts by mass of TINUVIN 479 (hydroxyphenyl triazine-type ultraviolet absorbing agent, manufactured by BASF Japan Co., Ltd.) as an ultraviolet absorbing agent, and 1.5 parts by mass of HALS 123 (hindered amine-type light stabilizer, manufactured by BASF Japan Co., Ltd.) as a light stabilizer.

HD-1013 is a polyurethane resin obtained by reacting a polycarbonate diol, which is a polycarbonate polyol (a1) derived from 3-methyl-1,5-pentanediol as a raw material, with 1,6-pentanediol as a chain extender (a2) and isophorone diisocyanate (IPDI) as an organic diisocyanate (a3).

H-62 is an isocyanurate compound whose main components are IPDI and hexamethylene diisocyanate (HDI).

[Example 9]

In Example 5, except that no primer treatment was performed and anti-drip agent 2 was used in place of anti-drip agent 1 to form an anti-drip layer, a test specimen having a layered structure of ETFE layer (thickness: 100 μm) / heat ray shielding layer / adhesive layer / ETFE layer (thickness: 50 μm) / anti-drip layer was obtained in the same manner as in Example 5. Anti-drip agent 2 was prepared as follows.

Anti-drip agent 2: to 28.35 parts by mass of ion-exchanged water was added 4.05 parts by mass of 1N nitric acid, and while stirring, 10.7 parts by mass of silica sol product name: "Snowtex (registered trademark) S, manufactured by Nissan Chemical Corporation, pH 10, solid content concentration: 30% by mass) was added, and stirring was continued for 60 minutes. Thereafter, 48.1 parts by mass of boehmite (product name: KX-1485, manufactured by K.I. Chemical Co., Ltd., pH 4.0, solid content concentration: 20% by mass) and 0.2 parts by mass of aminosilane (product name: KBM903, manufactured by Shin-Etsu Chemical Co., Ltd.) were added, followed by stirring for another 60 minutes.

Subsequently, 8.6 parts by mass of a 14 wt% aqueous solution of modified polyvinyl alcohol (product name "JMR-10M", JAPAN VAM & POVAL CO.,LTD., degree of polymerization 220, degree of saponification 220 mol%) was added while stirring, followed by stirring for 60 minutes. Thereafter, 100 parts by mass of industrial ethanol (product name "Solmix AP-1", manufactured by Japan Alcohol Trading Co., Ltd.) was added and stirred to prepare the composition.

[Table 1]

| | | Example | | | | | | | |
|---|---|---|---|---|---|---|---|---|---|
| | | 1 | 2 | 3 | 4 | 5 | 6 | 7 | 8 |
| Layer structure | Thermoplastic resin substrate | Presence | Presence | Presence | Presence | Presence | Presence | Presence | Presence |
| | Heat ray shielding layer | Presence | Absence | Presence | Presence | Presence | Presence | Presence | Presence |
| | Adhesive layer/ Bonding layer | Absence | Presence | Presence | Presence | Presence | Absence | Absence | Presence |
| | Thermoplastic resin substrate | Absence | Presence | Presence | Presence | Presence | Presence | Presence | Presence |
| | Anti-drip layer | Presence | Absence | Absence | Absence | Presence | Presence | Presence | Absence |
| Visible light transmittance (%) | Initial (A) | 87.9 | 91.5 | 88.9 | 88.9 | 88.9 | 90.2 | 88.1 | 89.0 |
| | After 5000 hrs | 89.7 | 91.1 | 88.3 | 88.6 | 88.3 | 85.0 | 86.0 | 86.0 |
| | Evaluation | A | A | A | A | A | A | A | A |
| Solar transmittance (%) | Initial (B) | 73.1 | 90.1 | 72.4 | 72.9 | 72.9 | 76.3 | 74.3 | 72.3 |
| | After 5000 hrs (C) | 77.4 | 90.0 | 72.3 | 72.5 | 72.5 | 78.1 | 73.8 | 72.5 |
| | (C) /(B) | 1.06 | 1.00 | 1.00 | 0.99 | 0.99 | 1.02 | 0.99 | 1.00 |
| | Evaluation | B | B | A | A | A | A | A | A |
| (A-B)/A×100(%) | | 17 | 2 | 19 | 18 | 18 | 15 | 16 | 18 |
| Haze | Initial | 5.01 | 7.62 | 7.67 | 7.78 | 7.78 | 6.40 | 11.21 | 7.70 |
| | After 5000 hrs | 21.07 | 7.41 | 8.93 | 8.89 | 8.89 | 20.65 | 16.78 | 7.79 |
| | Evaluation | B | A | A | A | A | B | B | A |
| Appearance after 5000 hrs | | B | A | A | A | A | A | A | A |
| Abrasion resistance after 5000 hrs | | B | A | A | A | A | A | A | A |

In Examples 3 to 8, the solar transmittance of the heat ray shielding films was appropriately suppressed even after 5,000 hours of a weather resistance accelerated test. Furthermore, since the heat ray shielding films of Examples 3 to 8 exhibited excellent visible light transmittance, it was found that they were unlikely to inhibit the growth of plants when applied to agricultural greenhouses.

On the other hand, the heat ray shielding film of Example 1, in which a thermoplastic resin substrate was provided only on one surface of the heat ray shielding layer, exhibited an initial solar transmittance of 73.1%, but the solar transmittance increased to 77.4% after 5,000 hours of the weather resistance accelerated test. In addition, the heat ray shielding film of Example 1 exhibited a significant increase in haze after 5,000 hours of the weather resistance accelerated test, resulting in a deterioration in appearance and abrasion resistance.

The heat ray shielding film of Example 2, which did not include a heat ray shielding layer, exhibited high solar transmittance from the initial stage and showed poor heat ray shielding performance.

[Industrial Applicability]

The heat ray shielding film in the present disclosure is suitably used for applications such as architectural window materials, vehicle window materials, agricultural applications such as agricultural greenhouses and the like.

The disclosure of Japanese Patent Application No. 2023-014803 is incorporated herein by reference in its entirety.

All documents, patent applications, and technical standards described herein are incorporated herein by reference to the same extent as if each individual document, patent application, and technical standard was specifically and individually indicated to be incorporated by reference.

Explanation of References

2: Thermoplastic resin substrate A, 4: Heat ray shielding layer, 6: Thermoplastic resin substrate B, 10: Heat ray shielding film

## Claims

1. A heat ray shielding film comprising, in the following order, a thermoplastic resin substrate A, a heat ray shielding layer comprising a binder resin and an inorganic particle, and a thermoplastic resin substrate B.

2. The heat ray shielding film according to claim 1, wherein an average thickness of the heat ray shielding layer is 1 μm or less.

3. The heat ray shielding film according to claim 1 or 2, wherein the inorganic particle comprises indium tin oxide.

4. The heat ray shielding film according to claim 1 or 2, wherein an adhesive layer or a bonding layer is provided at least between the heat ray shielding layer and the thermoplastic resin substrate A or between the heat ray shielding layer and the thermoplastic resin substrate B.

5. The heat ray shielding film according to claim 4, wherein at least one layer of the adhesive layer or the bonding layer comprises an ultraviolet absorbing agent.

6. The heat ray shielding film according to claim 3, further comprising an adhesive layer or a bonding layer at least between the heat ray shielding layer and the thermoplastic resin substrate A or between the heat ray shielding layer and the thermoplastic resin substrate B.

7. The heat ray shielding film according to claim 6, wherein at least one layer of the adhesive layer or the bonding layer comprises an ultraviolet absorbing agent.

8. The heat ray shielding film according to claim 1 or 2, wherein each of the thermoplastic resin substrate A and the thermoplastic resin substrate B independently comprises at least one thermoplastic resin selected from the group consisting of a polyolefin resin, a polyvinyl chloride resin, a polyethylene terephthalate resin, and a fluororesin.

9. The heat ray shielding film according to claim 1 or 2, wherein at least one of the thermoplastic resin substrate A or the thermoplastic resin substrate B comprises a fluororesin, and the fluororesin is a thermoplastic resin.

10. The heat ray shielding film according to claim 1 or 2, wherein a value of (visible light transmittance - solar transmittance) / visible light transmittance $\times$ 100 is 10% or more, and a ratio of a solar transmittance after an exposure treatment to a solar transmittance before the following exposure treatment is 1.05 or less:
exposure treatment: exposure for 5000 hours using an open frame carbon arc lamp in accordance with JIS K7350-4: 2008.

11. The heat ray shielding film according to claim 1 or 2, further comprising an anti-drip layer on the outer surface of at least one of the thermoplastic resin substrate A or the thermoplastic resin substrate B.

12. The heat ray shielding film according to claim 1 or 2, which is for agricultural use.

13. An agricultural greenhouse, comprising the heat ray shielding film according to claim 1 or 2.

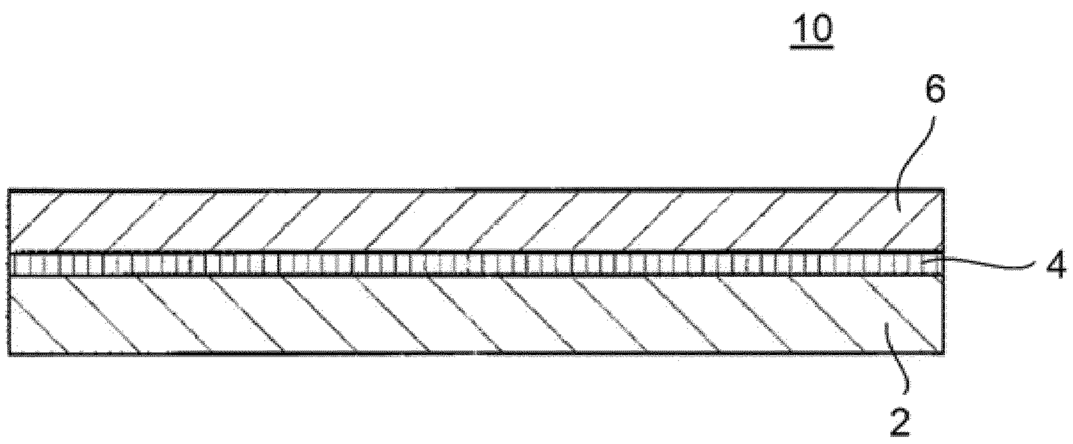


FIG. 1

## INTERNATIONAL SEARCH REPORT

International application No.
**PCT/JP2024/002280**

**A. CLASSIFICATION OF SUBJECT MATTER**

***A01G 9/14***(2006.01)i; ***A01G 13/02***(2006.01)i; ***B32B 27/18***(2006.01)i; ***C08J 5/18***(2006.01)i
FI: A01G9/14 S; A01G13/02 E; C08J5/18; B32B27/18 Z

According to International Patent Classification (IPC) or to both national classification and IPC

**B. FIELDS SEARCHED**

Minimum documentation searched (classification system followed by classification symbols)

A01G9/14; A01G13/02; B32B27/18; C08J5/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 9-140275 A (KUREHA CHEMICAL IND CO., LTD.) 03 June 1997 (1997-06-03) paragraphs [0015]-[0016], [0043]-[0052], [0055]-[0056], [0063], [0092] | 1-4, 6, 8-10, 12, 13<br>5, 7, 11 |
| Y | JP 2014-137440 A (DAI NIPPON PRINTING CO., LTD.) 28 July 2014 (2014-07-28) paragraph [0038] | 5, 7 |
| Y | JP 2012-021056 A (ASAHI GLASS COMPANY, LIMITED) 02 February 2012 (2012-02-02) paragraph [0039] | 11 |
| A | JP 10-286902 A (MITSUBISHI CHEM MKV CO.) 27 October 1998 (1998-10-27) entire text, all drawings | 1-13 |

☐ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 February 2024** | **12 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/002280**

| Patent document cited in search report | | | Publication date (day/month/year) | Patent family member(s) | Publication date (day/month/year) |
|---|---|---|---|---|---|
| JP | 9-140275 | A | 03 June 1997 | (Family: none) | |
| JP | 2014-137440 | A | 28 July 2014 | (Family: none) | |
| JP | 2012-021056 | A | 02 February 2012 | (Family: none) | |
| JP | 10-286902 | A | 27 October 1998 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013125548 A
- JP 2008105297 A
- JP 2007099884 A
- JP 2023014803 A